# NEUE EUROPÄISCHE PATENTSCHRIFT

(11) **EP 1 023 961 B2**
(45) Veröffentlichungstag und Bekanntmachung des Hinweises auf die Entscheidung über den Einspruch: **02.12.2009**
(45) Hinweis auf die Patenterteilung: 11.06.2003
(21) Anmeldenummer: 00101194.9
(22) Anmeldetag: 22.01.2000
(51) Int. Cl.: B23B 27/14

(54) **Schneidwerkzeug**
Cutting tool
Outil de coupe

(30) Priorität: 26.01.1999 DE 19903038
(43) Veröffentlichungstag der Anmeldung: 02.08.2000
(73) Patentinhaber: Jakob Lach GmbH & Co. KG, 63452 Hanau (DE)
(72) Erfinder: Maurer, Eugen Dipl. Ing., 61239 Ober-Mörlen (DE)
(74) Vertreter: Jochem, Bernd

(56) Entgegenhaltungen:
- EP-A- 0 356 097
- EP-A- 0 425 812
- DE-A- 3 134 959
- FR-A- 2 292 547
- JP-A- 1 171 705
- JP-A- 4 343 604
- US-A- 3 973 307
- US-A- 4 259 033
- US-A- 5 772 366
- ZA-A- 971 236

## Beschreibung

Die Erfindung befaßt sich mit einem Schneidwerkzeug für die spanabhebende Bearbeitung von Werkstücken, insbesondere aus Nichteisenmetallen oder Kunststoffen, dessen Schneidkante und angrenzende Spanfläche aus einer Schicht aus polykristallinem Diamant (PKD) oder polykristallinem Bornitrid (PKB) bestehen.

Insbesondere hochzähe Werkstoffe, wie z. B. Nichteisenmetalle oder Kunststoffe, neigen bei der spanabhebenden Bearbeitung zur Bildung sehr langer Späne, die durch unkontrollierte Bewegung die bearbeiteten Oberflächen beschädigen können. Man ist daher bestrebt, die Späne durch geeignete Maßnahmen im Bereich der Spanfläche zu kontrollieren.

Von Hartmetallwerkzeugen ist es z. B. aus der FR-A-2 292 547 schon bekannt, die Oberfläche im Bereich der Spanfläche bereits bei der Herstellung durch Pressen so zu formen, daß die Späne in bestimmter Weise geführt und/oder gebrochen werden. Besitzt ein Hartmetallwerkzeug mehrere Schneidkanten an seinen Flanken, sind die jeweils zugehörigen Erhebungen und Vertiefungen ineinander übergehend gestaltet.

Bei Werkzeugen aus PKD oder PKB ist es aus der ZA-A-97/1236 ebenfalls bereits bekannt, schon bei der Herstellung der Rohlinge in Sinterformen in die PKD- bzw. PKB-Schicht Vertiefungen einzuprägen, die später bei Gebrauch der aus den Rohingen hergestellten Werkzeuge als Spanbrecher wirken Abstands- und Tiefenmaße sind hierbei nicht angegeben, aber auch nicht kritisch, weil das Einformen einer etwas tieferen Vertiefung in etwas größerem Abstand von der Schneidkante keine Auswirkungne auf die Kosten hat. Weil außerdem wegen unterschiedlicher Einflussfaktoren im Einzelfall ein großer Bedarf an individuell gestalteten Spanbrechern besteht, werden bisher auch PKD- und PKB-Werzeuge mit einer Spanbrecherstufe aus Hartmetall eingesetzt, wobei ein Einsatz, der beispielsweise aus auf einem Hartmetallträger aufgebrachtem PKD besteht, in einen genau passenden Einschnitt eines tragenden Hartmetallkörpers eingelötet ist. Dabei wird jedoch nur der den PKD tragende Hartmetallträger in dem Einschnitt verlötet, so daß zwischen der Spanfläche des PKD und der entsprechenden Fläche des Einschnitts eine Fuge verbleibt. Es hat sich gezeigt, daß Späne in diese Fuge eindringen und sich dort festsetzen können. Diese Möglichkeit steht jedoch dem eigentlichen Bestreben entgegen, die Späne von der Schnittfläche fernzuhalten, um Beschädigungen zu vermeiden. Auch Beschädigungen des Einschnitts selbst können auftreten.

Die JP 1 171 705 zeigt zwar auch ein vorbekanntes Schneidwerkzeug der eingangs genannten Art mit einer durch Materialabtrag erzeugten, allseitig umgrenzten Einsenkung in einer PKD- oder PKB-Schicht, bemängelt aber die lange Bearbeitungszeit und die hohen Fertigungskosten im Vergleich zu entsprechenden Werkzeugen, bei denen die Schneidkante an einem getrennt hergestellten Steg aus PKD bzw. PKB ausgebildet ist, hinter dem sich in einem entsprechend großen Abstand zur Schneidkante eine Einsenkung in einem aus Hartmetall bestehenden Teil befindet.

Eine weitere Variante, im Wege des Elektroerodierens durch die zum Zurechtschneiden des Einsatzes verwendete Schneideinrichtung über die gesamte Breite durchgängige Querrillen in die PKD-Schicht einzuarbeiten, erwies sich als unbefriedigend, da die bis zu den Außenkanten reichenden Querrillen eine hohe Bruchgefahr des Materials bewirken. Ohnehin besteht bei PKD und PKB, das aufgrund seiner kubisch orientierten Bornitridkristalle auch als CBN bekannt ist, aufgrund der sehr spröden Werkstoffeigenschaften die Gefahr von Sprödbrüchen, so daß gewisse Zielkonflikte mit der Vorgabe bestehen, den Span möglichst nahe an der Schneidkante zu brechen bzw. zu führen.

Darüber hinaus ist aus der EP-A-0 356 097 ein Schneidwerkzeug für den Bergbau bekannt, das aus einem Körper aus Hartmetall mit einer Mulde auf der Oberseite, die mit einer harten Schicht aus Diamant oder Bornitrid ausgekleidet ist, besteht. Nach Verschleiß des Randbereichs bildet die harte Schicht die Schneidkante und die Spanfläche. Sie bestimmt mit ihrer Neigung im Bereich der Böschung der Mulde den Spanwinkel, enthält aber keine Einsenkung in der Spanfläche in der Nachbarschaft zur Schneidkante.

Die Aufgabe der Erfindung besteht darin, ein Schneidwerkzeug der eingangs beschriebenen Art zu schaffen, das sich trotz seiner extremen Härte wirtschaftlich mit einer zur Spanführung oder zum Brechen des Spans geeigneten reliefartigen Form der Spanfläche herstellen läßt, ohne daß die Festigkeit der wenigstens einen Schneidkante gefährdet ist.

Erfindungsgemäß wird die Aufgabe dadurch gelöst, daß die Spanfläche im Abstand von 0,2 bis 0,4 mm von der Schneidkante eine allseitig umgrenzte durch Materialabtrag erzeugte Einsenkung mit der Tiefe von 0,2 bis 0,5 mm aufweist.

Durch den verhältnismäßig geringen Materialabtrag wird das Material im Bereich der Schneidkante nicht geschwächt, so daß man die vertiefung sehr nahe an der Schneidkante plazieren kann, wo ihre geringe Tiefe wiederum zum Brechen oder Leiten des Spanes ausreichend ist. Die genauen Maße für den Abstand der Einsenkung von der Schneidkante und ihre Tiefe hängen wegen der Gefahr eines Sprödbruches von der Geometrie und den Schnittbedingungen ab. Neben dem zu bearbeitetenden Werkstück spielen dabei vor allem der Freiwinkel, der Spanwinkel und der Spitzenwinkel bei Einstechwerkzeugen eine bedeutende Rolle, wobei auch die Werkstückform, insbesondere ein eventuell durchzuführender unterbrochener Schnitt, den Abstand von der Schneidkante beeinflussen. Die Tiefe und der Umriß der Einsenkung können ungleichmäßig sein.

Zum Herstellen der Einsenkung läßt sich problemlos das Profilsenkerodieren anwenden, da die zum Einsatz kommenden Materialien ohnehin eine elektrische Leitfähigkeit aufweisen, um sie im Wege des bereits angesprochenen Drahterodieren schneiden zu können. Auch andere Erodierverfahren, Schleifverfahren und Verdampfungsverfahren können eingesetzt werden.

Durch die unmittelbar aus dem Material herausgearbeitete oder in dieses eingeformte Einsenkung bestehen auch keine Probleme mit Fugen zwischen dem PKD bzw. CBN und einem Hartmetallkörper, in welchen sich Späne festsetzen könnten. Vorzugsweise ist der Übergang vom Boden zu den Seitenwänden der Einsenkung mit einem Radius von 0,04 bis 0,06 mm gerundet.

Eine derartige Kantenrundung ermöglicht auf der einen Seite ein sicheres Brechen des Spanes und vermeidet auf der anderen Seite eine unnötig große Kerbwirkung, die bei Stoßbelastungen der Schnittkante zu Sprödbrüchen führen könnte.

Für den Einsatz als Spanleitstufe ist es zweckmäßig, daß der Übergang vom Boden zu den Seitenwänden der Einsenkung mit einem Radius von 0,4 bis 0,6 mm gerundet ist.

In weiterer bevorzugter Ausgestaltung der Erfindung ist vorgesehen, daß sich die Einsenkung als schmaler länglicher Graben mit einer Breite von 0,25 bis 0,5 mm parallel zur Schnittkante erstreckt.

Ein derartig dimensionierter Graben hat die gewünschten spanbrechenden Eigenschaften und läßt sich schnell und einfach mit einer Profilelektrode herstellen. Demgegenüber ist ein großflächiger Materialabtrag wesentlich teurer in der Herstellung.

Bei Einstechwerkzeugen ist es zweckmäßig, daß sich an der Schneidspitze die Einsenkung bis auf einen Abstand von 0,2 bis 0,4 mm von den Schneidkanten über die Breite der Schneidspitze erstreckt.

In weiterer bevorzugter Ausbildung der Erfindung ist vorgesehen, daß die Schicht aus PKD oder PKB die obere Lage eines Einsatzes ist, dessen aus Hartmetall bestehende untere Lage materialschlüssig mit dem Körper des Schneidwerkzeuges verbunden ist. Die beispielsweise ungefähr 0,5 mm dicke Schicht aus PKD oder PKB ist untrennbar mit der Hartmetallunterlage verbunden, beispielsweise dadurch, daß beim Preßvorgang bei der Entstehung des polykristallinem Diamantbelags kleinste Diamantkörner von einem metallischen Bindemittel unterstützt mit der Hartmetalloberfläche verwachsen.

Vorzugsweise bildet die Schicht aus PKD oder PKB die gesamte Oberfläche einer Wendeschneidplatte und ist mit mehreren Einsenkungen versehen.

Aus Kostengründen ist es günstiger, statt einer durchgängigen Einsenkung zwischen den Schneidkanten jeweils den Schneidkanten zugeordnete einzelne Einsenkungen vorzusehen.

Es versteht sich, daß die zuvor beschriebenen Schneidwerkzeuge als Dreh-, Bohr- und Fräswerkzeug auch in der Form von in Halter einzusetzenden Wendeschneidplatten einsetzbar sind.

Nachfolgend wird anhand der beigefügten Zeichnungen näher auf Ausführungsbeispiele der Erfindung eingegangen. Es zeigen:
- Fig. 1: eine Draufsicht eines Werkzeuges mit einem Schneidplatteneinsatz;
- Fig. 2: einen Längsschnitt des Werkzeuges nach Fig. 1;
- Fig. 3: eine Draufsicht eines weiteren Werkzeuges mit einem Schneidplatteneinsatz;
- Fig. 4: einen Längsschnitt des Werkzeuges nach Fig. 3;
- Fig. 5: eine Draufsicht auf eine Schneidplatte mit drei Schneidkanten;
- Fig. 6: einen vergrößerten Längsschnitt der Schneidplatte im Bereich einer Schneidkante.

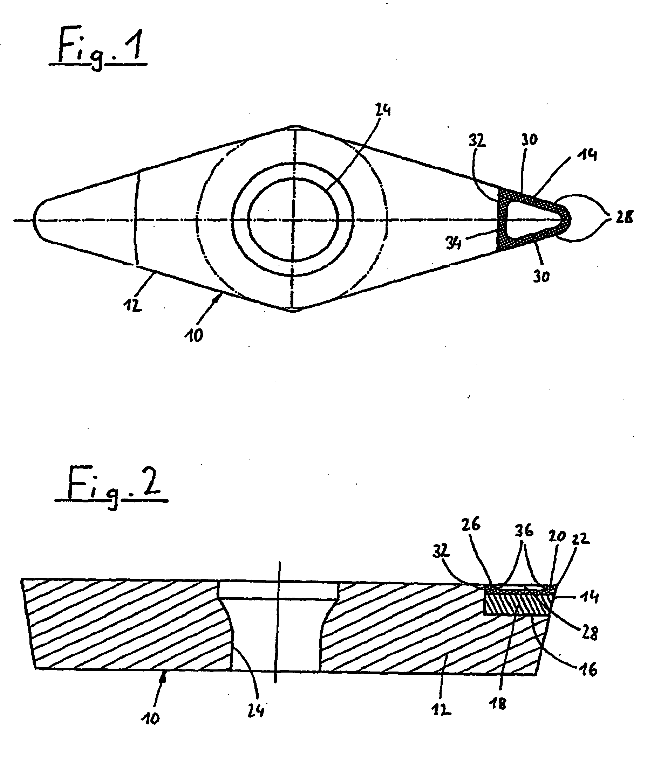

In Fig. 1 ist eine Schneidplatte 10 dargestellt, die aus einem Grundkörper 12 und einem Schneideinsatz 14 besteht. Der Schneideinsatz 14, der mit dem Grundkörper 12 in einer entsprechenden Aussparung 16 (siehe Fig. 2) verbunden ist, gliedert sich in einen Hartmetallgrundkörper 18, der mit der Aussparung 16 verlötet ist, und eine auf den Grundkörper 18 aufgebrachte Schicht 20 aus polykristallinem Diamant (PKD) oder wahlweise kubisch kristallinem Bornitrid (CBN), welche die eigentliche Schneidkante 22 bildet.

In der Mitte der Schneidplatte 10 ist eine Bohrung 24 vorgesehen, mit Hilfe derer sich die Schneidplatte 10 in einem Werkzeughalter in an sich bekannter Weise präzise befestigen läßt.

Im Bereich der Spanfläche 26 des Schneideinsatzes 14 ist in der Schicht 20 aus PKD eine Einsenkung 28 vorgesehen, die im Wege des Profilsenkerodierens mit einer Profilelektrode aus einer speziellen Kupferlegierung hergestellt worden ist. Eine derartige Bearbeitung ist möglich, da die PKD-Schicht 20 ohnehin mit einem metallischen Bindemittel versetzt ist, um den Schneideinsatz 14 im Wege des Erodierens mit einer Drahtelektrode schneidend in seine gewünschte Form bringen zu können. Die Einsenkung 28 reicht bis ungefähr 0,4 mm an die zu beiden Seiten der Schneidspitze angeordneten Schneidkanten 28 heran und besitzt eine Tiefe von ungefähr 0,25 mm. Da das Profilsenkerodieren eine sehr feine Bearbeitung gestattet, ergeben sich Rauhtiefen der Oberfläche der Einsenkung 28 von weniger als 5 µ. Die Einsenkung 28 ist so ausgebildet, daß nicht nur im Bereich der Schneidkanten 14 Stege 30 der bereits erwähnten Breite von 0,4 mm verbleiben, sondern auch im Bereich der Anschlagkante 32 ein Anlagesteg 34 der erwähnten Breite verbleibt. Zwischen den Stegen 30, 34 und der Einsenkung 28 sind Übergangsbereiche 36 mit einem Radius von 0,5 mm vorgesehen, um die entstehenden Späne ableiten zu können. Die geringe Kerbwirkung im Bereich der Stege 30, 34 reduziert die Gefahr eines Sprödbruches bei einer Schlagbelastung.

Beim Bearbeiten insbesondere von hochzähen Materialien, wie z. B. Nichteisenmetallen oder Kunststoffen, sorgt die Einsenkung 28 dafür, daß es nicht zu einer unkontrollierten Bildung langer Späne kommt und eine Beschädigung der Werkstückoberfläche durch unkontrollierte Spanbewegungen vermieden wird.

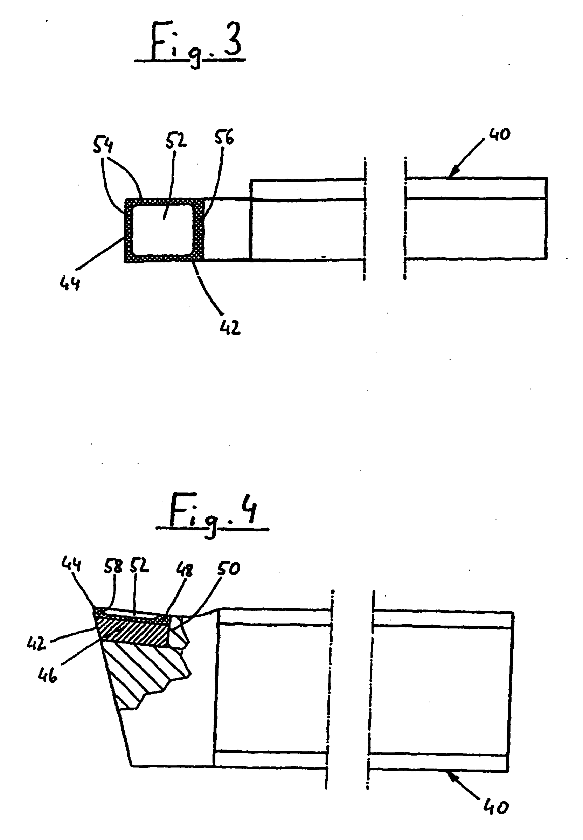

In Fig. 3 ist ein sog. AT-Einsatz 40 dargestellt, der beim Drehen Verwendung findet. Der AT-Einsatz 40 verfügt über einen Schneideinsatz 42 mit einer geraden Schnittkante 44. Ähnlich der in Fig. 1 und 2 dargestellten Schneidplatte 10 besteht der Schneideinsatz 42 aus einem Hartmetallkörper 46 (siehe Fig. 4) und einer darauf aufgebrachten Schicht 48 aus PKD, welche die Schneidkante 44 bildet. Der Hartmetallkörper 46 des Schneideinsatzes 42 ist in eine entsprechend ausgeformte Aussparung 50 an der Spitze des AT-Einsatzes 40 eingelötet.

Die PKD-Schicht 48 ist mit einer mittigen Einsenkung 52 versehen, so daß im Bereich der Schneidkante 44 und den seitlichen Flanken des Schneideinsatzes 42 ein umlaufender Steg 54 mit einer Breite von ca. 0,3 mm verbleibt. Der an der Aussparung 50 anliegende Steg 56 kann etwas breiter gewählt werden. Auch bei dem AT-Einsatz 40 sind die Übergangsbereiche 58 zwischen den Stegen 54, 56 und der Einsenkung 52 mit einem Radius von ungefährt 0,5 mm versehen, um die Kerbwirkung zu verringern und eine gute Ableitung der entstehenden Späne zu bewirken.

Auch bei dem in Fig. 3 und 4 dargestellten AT-Einsatz wirkt die Einsenkung 52 als Spanleitstufe der unkontrollierten Ausbildung von langen Spänen im Bereich der zu bearbeitenden Schnittfläche entgegen.

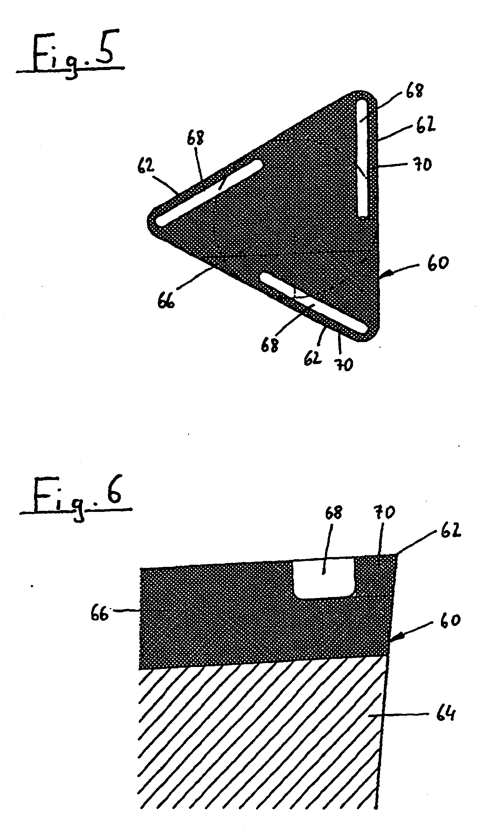

In Fig. 5 ist eine Vollschicht-Schneidplatte 60 dargestellt, die über drei Schneidkanten 62 verfügt und als Wendeschneidplatte in drei verschiedenen Drehwinkelstellungen in einer Halterung (nicht gezeigt) befestigbar ist, um nach dem Verschleiß einer Schneidkante 62 auch die beiden übrigen Schneidkanten einsetzen zu können.

Die Schneidplatte 60 ähnelt in ihrem Aufbau den zuvor beschriebenen Schneideinsätzen und besteht aus einem Hartmetallkörper 64, auf den die die Schneidkanten 62 bildende Schicht 66 aus PKD aufgebracht ist (siehe Fig. 6).

Im Bereich der Schneidkanten 62 sind in der PKD-Schicht 66 nutartige Einsenkungen 68 so angeordnet, daß zwischen den Einsenkungen 68 und den ihnen zugehörigen Schneidkanten 62 ein ungefähr 0,2 mm breiter Steg 70 verbleibt. Die Breite der Nuten 68 liegt bei 0,3 mm.

Entsprechend ihrer geringen Breite von 0,3 mm sind auch die Radien im Grundbereich der Einsenkung 68 mit 0,05 mm erheblich kleiner als bei den in Fig. 1 bis 4 abgebildeten Varianten. Während die dort beschriebenen Einsenkungen 28 mit den vergleichsweise großen Radien auch eher die Funktion einer Spanführung übernehmen, dienen die schmalen Einsenkungen 68 der Vollschicht-Schneidplatte 60 mit ihren kleinen Radien dem sofortigen Brechen der entstehenden Späne, um auf diese Art und Weise der Bildung langer Späne, die durch unkontrollierte Bewegung die Werkstückoberfläche beschädigen könnten, zu vermeiden.

Wie bereits angedeutet, dienen die unterschiedlichen Geometrien der Einsenkungen 28, 52, 68 entweder dem gezielten Führen der entstehenden Späne oder dem Brechen der Späne auf eine für den Bearbeitungsvorgang unschädliche Länge. Die Anordnung der Einsenkungen bezüglich der Schneidkanten hängt jedoch auch von der Geometrie und den Schnittbedingungen ab, da Brüche im Bereich der Schneidkanten unbedingt zu vermeiden sind. Entsprechend können große Freiwinkel, zusätzliche Spanwinkel und kleine Spitzenwinkel bei Einstechwerkzeugen größere Abstände der Einsenkungen von den Schnittkanten erfordern. Auch bei ungünstigen Bearbeitungsbedingungen, beispielsweise bei einem unterbrochenen Schnitt, sollte die Breite der Stege zwischen den Einsenkungen und den Schnittkanten vorsorglich größer gewählt werden als bei idealen Bedingungen. Auch die Festigkeit des Werkstoffes des zu bearbeitenden Werkstückes spielt bei diesen Erwägungen selbstverständlich eine Rolle. Übliche Freiwinkel liegen zwischen 0° und 15°, in Ausnahmefällen auch bei 20°.

## Patentansprüche

1. Schneidwerkzeug für die spanabhebende Bearbeitung von Werkstücken, insbesondere aus Nichteisenmetallen oder Kunststoffen, dessen Schneidkante (22, 44, 62) und angrenzende Spanfläche (26) aus einer Schicht (20; 48; 66) aus polykristallinem Diamant (PKD) oder polykristallinem Bornitrid (PKB) bestehen, **dadurch gekennzeichnet, daß** die Spanfläche (26) im Abstand von 0,2 bis 0,4 mm von der Schneidkante (22, 44, 62) eine allseitig umgrenzte, durch Materialabtrag erzeugte Einsenkung (28; 52; 68) mit einer Tiefe von 0,2 bis 0,5 mm aufweist.

2. Schneidwerkzeug nach Anspruch 1, **dadurch gekennzeichnet, daß** der Übergang (36; 58) vom Boden zu den Seitenwänden der Einsenkung (28; 52) mit einem Radius von 0,4 bis 0,6 mm gerundet ist.

3. Schneidwerkzeug nach Anspruch 1, **dadurch gekennzeichnet, daß** sich die Einsenkung (68) als schmaler, länglicher Graben mit einer Breite von 0,25 bis 0,5 mm parallel zur Schnittkante (62) erstreckt.

4. Schneidwerkzeug nach Anspruch 3, **dadurch gekennzeichnet, daß** der Übergang vom Boden zu den Seitenwänden der Einsenkung (68) mit einem Radius von 0,04 bis 0,06 mm gerundet ist.

5. Schneidwerkzeug nach einem der vorhergehenden Ansprü che, **dadurch gekennzeichnet, daß** sich an der Schneid spitze eines Einstechwerkzeuges (10, 14; 40, 42) die Einsenkung (28; 52) bis auf einen Abstand von 0,2 bis 0,4 mm von den Schneidkanten (22; 44) über die Breite der Schneidspitze erstreckt.

6. Schneidwerkzeug nach einem der vorhergehenden Ansprü che, **dadurch gekennzeichnet, daß** die Schicht (20; 48) aus PKD oder PKB die obere Lage eines Einsatzes (14; 42) ist, dessen aus Hartmetall bestehende untere Lage (18; 46) materialschlüssig mit dem Körper (16; 50) des Schneidwerkzeuges (10; 40) verbunden ist.

7. Schneidwerkzeug nach einem der Ansprüche 1 bis 5, **dadurch gekennzeichnet, daß** die Schicht (66) aus PKD oder PKB die gesamte Oberfläche einer Wendeschneidplatte (60) bildet und mit mehreren Einsenkungen (68) versehen ist.

8. Schneidwerkzeug nach einem der vorhergehenden Ansprüche, **dadurch gekennzeichnet, daß** es als Dreh-, Bohroder Fräswerkzeug eingesetzt ist.

9. Schneidwerkzeug nach einem der vorhergehenden Ansprüche, **dadurch gekennzeichnet, daß** die Einsenkung (28; 52; 68) durch eine aus der Gruppe der Schleifverfahren, Erodierverfahren, einschließlich Profilsenkerodieren, und Verdampfungsverfahren, einschließlich Laserbestrahlung, ausgewählte Bearbeitung erzeugt ist.

## Claims

1. A cutting tool for the machining of workpieces, in particular consisting of non-ferrous metals or plastics materials, of which the cutting edge (22,44,62) and adjoining tool face (26) comprise a layer (20;48;66) of polycrystalline diamond (PCD) or polycrystalline boron nitride (PCB), **characterised in that** the tool face (26) has at a distance of 0.2 to 0.4 mm from the cutting edge (22,44,62) a recess (28;52;68) formed by removal of material, bounded on all sides and of a depth of 0.2 to 0.5 mm.

2. A cutting tool according to Claim 1, **characterised in that** the transition (36;58) from the base to the side walls of the recess (28;52) is rounded with a radius of 0.4 to 0.6 mm.

3. A cutting tool according to Claim 1, **characterised in that** the recess (68) extends as a narrow elongate trench of a width of 0.25 to 0.5 mm parallel to the cutting edge (62).

4. A cutting tool according to Claim 3, **characterised in that** the transition from the base into the side walls of the recess (68) is rounded with a radius of 0.04 to 0.06 mm.

5. A cutting tool according to any one of the preceding Claims, **characterised in that** on the cutting tip of a recessing tool (10,14;40,42) the recess (28;52) extends over the width of the cutting tip up to a distance of 0.2 to 0.4 mm from the cutting edges (22;44).

6. A cutting tool according to any one of the preceding Claims, **characterised in that** the layer (20;48) of PCD or PCB is the upper layer of an insert (14;42), whose lower layer (18;46) consisting of hard metal is bonded to the material of the body (16;50) of the cutting tool (10; 40).

7. A cutting tool according to any one of Claims 1 to 5, **characterised in that** the layer (66) of PCD or PCB forms the entire upper surface of a disposable insert tip (60) and is provided with a plurality of recesses (68).

8. A cutting tool according to any one of the preceding Claims, **characterised in that** it is used as a turning, drilling or milling tool.

9. A cutting tool according to any one of the preceding Claims, **characterised in that** the recess (28; 52;68) is formed by a machining operation chosen from the group comprising grinding processes, erosion processes, including profile counterboring erosion and vaporisation processes, including laser irradiation.

## Revendications

1. Outil de coupe pour usiner des pièces, en particulier des pièces en métaux non ferreux ou en matières synthétiques, en retirant des copeaux, dont l'arête coupante (22, 44, 62) et la face d'attaque (26) voisine consistent en une couche (20 ; 48 ; 66) de diamant polycristallin ou en nitrure de bore polycristallin,
**caractérisé en ce que**
la face d'attaque (26) présente un renfoncement (28 ; 52 ; 68) formé par enlèvement de matériau, d'une profondeur comprise entre 0,2 et 0,5 mm, délimité de tous les côtés et situé à une distance comprise entre 0,2 et 0,4 mm de l'arête coupante (22, 44, 62).

2. Outil de coupe selon la revendication 1,
**caractérisé en ce que**
la transition (36 ; 58) du fond vers les parois latérales du renfoncement (28 ; 52) est arrondie selon un rayon compris entre 0,4 à 0,6 mm.

3. Outil de coupe selon la revendication 1,
**caractérisé en ce que**
le renfoncement (68) s'étend parallèlement à l'arête coupante (62) comme une tranchée étroite et allongée d'une largeur comprise entre 0,25 et 0,5 mm.

4. Outil de coupe selon la revendication 3,
**caractérisé en ce que**
la transition du fond vers les parois latérales du renfoncement (68) est arrondie selon un rayon compris entre 0,04 à 0,06 mm.

5. Outil de coupe selon l'une des revendications précédentes,
**caractérisé en ce qu'**
à la pointe coupante d'un outil de rectification en plongée (10, 14 ; 40, 42) le renfoncement (28 ; 52) s'étend sur la largeur de la pointe coupante jusqu'à une distance comprise entre 0,2 et 0,4 mm des arêtes coupantes (22 ; 44).

6. Outil de coupe selon l'une des revendications précédentes,
**caractérisé en ce que**
la couche (20 ; 48) en diamant polycristallin ou en nitrure de bore polycristallin est la couche supérieure d'une insertion (14 ; 42) dont la couche inférieure (18 ; 46) constituée d'alliage dur est reliée par le matériau au corps (16 ; 50) de l'outil de coupe (10 ; 40).

7. Outil de coupe selon l'une des revendications 1 à 5,
**caractérisé en ce que**
la couche (66) en diamant polycristallin ou en nitrure de bore polycristallin forme toute la surface d'une plaquette amovible (60) et est munie de plusieurs renfoncements (68).

8. Outil de coupe selon l'une des revendications précédentes,
**caractérisé en ce qu'**
il est utilisé en tant qu'outil de tournage, de forage ou de fraisage.

9. Outil de coupe selon l'une des revendications précédentes,
**caractérisé en ce que**
le renfoncement (28 ; 52 ; 68) est produit par un usinage choisi parmi le procédé de polissage, le procédé d'érosion y compris l'enfonçage par érosion de profil et le procédé de vaporisation y compris l'irradiation par laser.
